# EUROPEAN PATENT APPLICATION

(11) **EP 1 216 854 A2**
(43) Date of publication of application: **26.06.2002**
(21) Application number: 01103589.6
(22) Date of filing: 21.02.2001
(51) Int. Cl.: B60C 23/04

(54) **Transmitter and transmitting method of tire condition monitoring apparatus**

(30) Priority: 19.12.2000 JP 2000384664
(71) Applicant: Pacific Industrial Co., Ltd., Ogaki-shi, Gifu-ken 503-8603 (JP)
(72) Inventor: Saheki, Setsuhiro, c/o Pacific Industrial Co., Ltd, Ogaki-shi, Gifu-ken 503-8603 (JP)
(74) Representative: Maiwald Patentanwalts GmbH

(57) **Abstract**

A tire condition monitoring apparatus includes transmitters (3). Each transmitter (3) is installed in a vehicle tire (2) and is powered by a battery (15). Each transmitter (3) includes a sensor (11, 14) for detecting a condition of the associated tire (2), a transmission circuit (12) for wirelessly transmitting data representing the condition and a controller (10) that controls the sensor (11, 14) and the transmission circuit (12). The controller (10) controls each sensor (11, 14) to detect the condition at predetermined detection intervals. Also, the controller (10) controls the transmission circuit (12) to transmit data that represents the detected condition only when the detected current tire condition (Pn, Tn) has changed from the previously transmitted tire condition (Pt, Tt) by a predetermined value (α1, α2) or more. As a result, significant changes of the tire condition are immediately communicated to a driver, and battery strength is conserved.

## Description

### BACKGROUND OF THE INVENTION

The present invention relates to an apparatus for monitoring the conditions of automobile tires. More particularly, the present invention pertains to a transmitter and method for transmitting data regarding the conditions of tires to a receiver mounted on a vehicle body.

Wireless tire condition monitoring apparatuses for allowing a driver in a vehicle passenger compartment to check the conditions of vehicle tires have been proposed. One such monitoring system includes transmitters and a receiver. Each transmitter is located in one of the wheels and the receiver is located in the body frame of the vehicle. Each transmitter detects the conditions such as air pressure and the temperature of the associated tire and wirelessly transmits the detection information. The receiver receives the information from the transmitters.

Since each transmitter is powered by a battery, the transmitter stops operating when the battery runs down. Each transmitter is attached to the corresponding wheel and is located in the corresponding tire. To change the battery of a transmitter, the tire must be removed from the wheel. Changing the battery of a transmitter is therefore burdensome. Further, the transmitters are constructed with high accuracy to endure the harsh conditions in the tire. Therefore, opening the casing of a transmitter for changing the battery can make the transmitter less reliable. Accordingly, changing the battery is not practical.

The capacity of the battery may be increased to permit the transmitter to function for a long period without changing the battery. This, however, increases the size and the weight of the battery thus altering the balance of the corresponding tire. Therefore, the capacity of the battery cannot be increased beyond a certain limit.

To extend the life of the batteries, some prior art apparatuses use transmitters that only periodically transmit signals. This minimizes the cumulative operating time of the transmitters, which allows batteries having a relatively small capacity to be used for a long period.

Tire pressure can change at various rates. For example, natural leakage of air gradually decreases the pressure of a tire. When a tire goes flat due to damage, the air pressure drops quickly. Further, the rates of pressure loss from natural leakage and damage vary according to the circumstances. Thus, there is a demand for a monitoring apparatus that immediately detects air pressure changes regardless of the rate of pressure loss and extends battery life.

However, simply making transmissions from a transmitter periodic cannot satisfy this need. As long as the tire pressure decreases slowly, relatively long transmission intervals cause no problem in detecting an abnormality. However, if the tire pressure suddenly decreases, the driver will not be immediately informed of the abnormality. If the transmission intervals are relatively short, the driver will be immediately notified of a sudden drop in tire pressure. However, the short intervals increase the cumulative operating time of the transmitter, which shortens the life of the battery.

### SUMMARY OF THE INVENTION

Accordingly, it is an objective of the present invention to provide a transmitter in a tire condition monitoring apparatus and a method that immediately inform a driver of tire condition changes and conserve battery strength.

To achieve the foregoing and other objectives and in accordance with the purpose of the present invention, a battery-powered transmitter for wirelessly transmitting data regarding the condition of a vehicle tire is provided. The transmitter includes a sensor for detecting the condition of the tire, a transmission circuit for wirelessly transmitting data representing the detected tire condition and a controller for controlling the sensor and the transmission circuit. The controller controls the sensor to detect the tire condition at predetermined intervals. The controller controls the transmission circuit to transmit data that represents the detected current tire condition when a value representing the detected current tire condition has changed from a previously transmitted value representing the detected tire condition by a predetermined amount or by an amount that is greater than the predetermined amount.

In another transmitter provided by the present invention, a controller controls a sensor to detect the tire condition at predetermined intervals. The controller controls a transmission circuit to transmit data that represents the detected current tire condition only when the detected current tire condition has changed from a tire condition that was detected in the past.

The transmitter according to the present invention, together with a receiver for receiving data that is wirelessly transmitted from the transmitter, forms a vehicle tire condition monitoring apparatus.

The present invention also provides a method for wirelessly transmitting data regarding the condition of a vehicle tire. The method includes detecting the condition of the tire at predetermined intervals and transmitting data that represents the detected current tire condition when the difference between a value representing the detected current tire condition and a previously transmitted value representing the detected tire condition is equal to or greater than a predetermined value.

Another transmission method provided by the present invention includes detecting the condition of the tire at predetermined intervals and transmitting data that represents the detected current tire condition only when the detected current tire condition has changed from a tire condition that was detected in the past.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:
Fig. 1 is a diagrammatic view illustrating a tire air pressure monitoring apparatus according to a first embodiment of the present invention;
Fig. 2 is a block diagram illustrating a transmitter in the apparatus of Fig. 1;
Fig. 3 is a block diagram illustrating a receiver in the apparatus of Fig. 1;
Fig. 4(a) is a flowchart showing a pressure analysis procedure of the transmitter of Fig. 2;
Fig. 4(b) is a flowchart showing a temperature analysis procedure of the transmitter of Fig. 2;
Fig. 5 is a timing chart showing operation of the transmitter of Fig. 2;
Fig. 6 is graph showing the relationship between changes of tire pressure along time and operation of the transmitter shown in Fig 2; and
Fig. 7(a) is a flowchart showing a pressure analysis procedure of a transmitter according to a second embodiment of the present invention; and
Fig. 7(b) is a flowchart showing a temperature analysis procedure of the transmitter of the second embodiment.

### DETAILED DESCRIPTION OF THE PREFERRED EMBODIMENTS

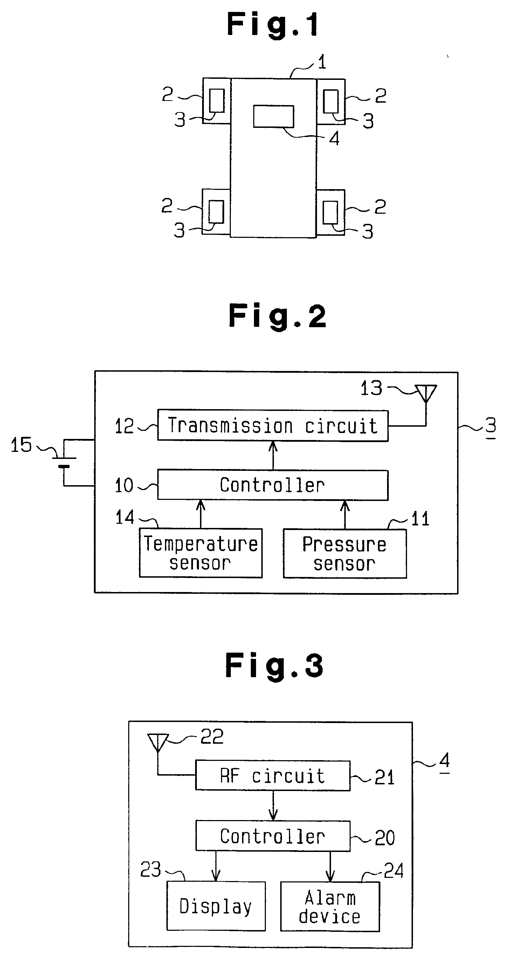

A tire condition monitoring apparatus according to a first embodiment of the present invention will now be described with reference to Figs. 1 to 6. As shown in Fig. 1, the tire condition monitoring apparatus includes four tires 2 of a vehicle 1, four transmitters 3, each located in one of the tires 2, and a receiver 4, which is mounted on the body frame of the vehicle 1. Each transmitter 3 is secured to the wheel of the associated tire 2 such that each transmitter 3 is located within the associated tire 2. Each transmitter 3 detects the air pressure and the internal temperature of the associated tire 2 and sends data representing the detection information to the receiver 4.

As shown in Fig. 2, each transmitter 3 includes a controller 10, which is, for example, a microcomputer. The controller 10 includes a central processing unit (CPU), a random access memory (RAM) and a read only memory (ROM). A unique ID code is registered in each controller 10. The ID code is used to distinguish the associated transmitter 3 from the other three transmitters 3.

A pressure sensor 11 located in each tire 2 detects the internal air pressure of the associated tire 2 and sends data representing the detected pressure to the controller 10. A temperature sensor 14 detects the temperature in the associated tire 2 and sends data representing the detected temperature to the controller 10. The controller 10 sends the received pressure and temperature data and the ID code to a transmission circuit 12. The transmission circuit 12 transmits data, which includes the pressure and temperature data and the ID code, to the receiver 4 through a transmission antenna 13.

A battery 15 powers the transmitter 3. The controller 10, the pressure sensor 11, the transmission circuit 12, the antenna 13, the temperature sensor 14 and the battery 15 are housed in a casing (not shown).

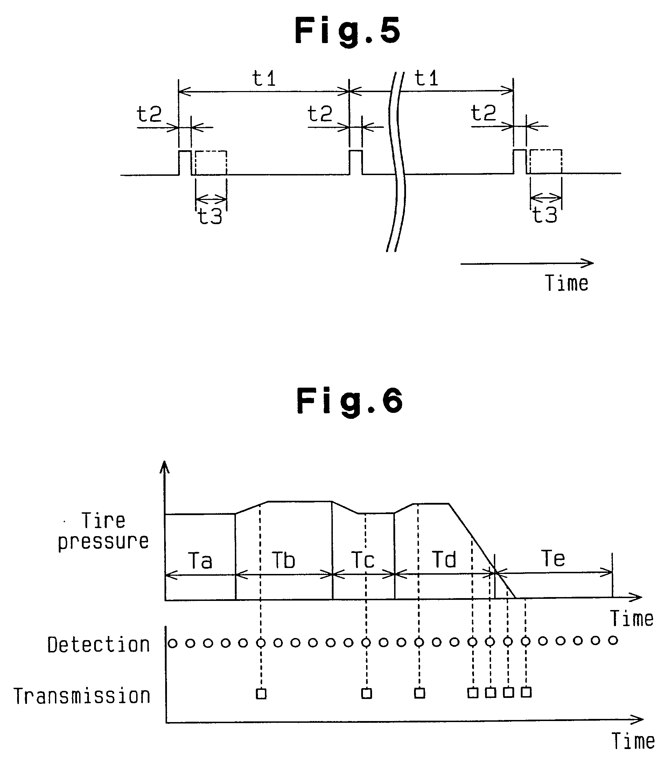

As shown in Fig. 5, the controller 10 commands the pressure sensor 11 and the temperature sensor 14 to perform detection at predetermined time intervals t1. The time interval t1 will be referred to as a detection interval. A time period t2 shown in Fig. 5 is a period from when the pressure sensor 11 and the temperature sensor 14 start detection until the resultant data is processed by the controller 10. The time t2 will be referred to as a detection time.

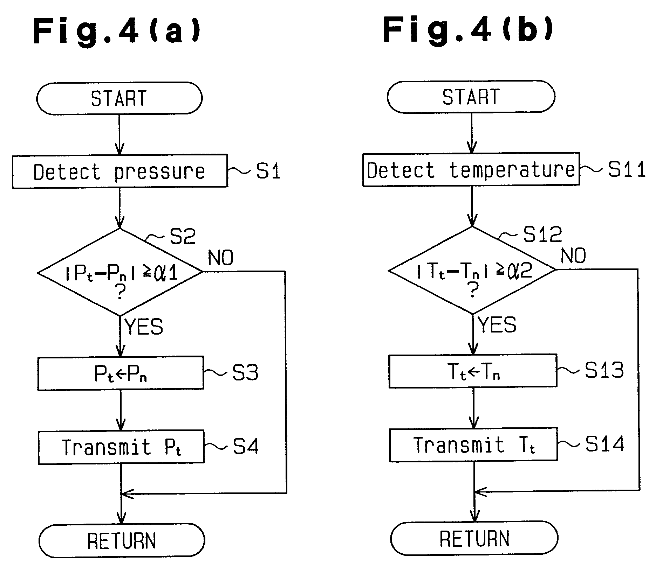

When a predetermined transmission condition is satisfied based on the pressure data from the pressure sensor 11 and the temperature data from the temperature sensor 14, the controller 10 commands the transmission circuit 12 to perform a transmission as shown by the broken line in Fig. 5. A time period t3 in Fig. 5 represents a period during which the transmission circuit 12 is performing a transmission. The time t3 will be referred to as a transmission time. The transmission condition will be discussed below with reference to the flowchart of Figs. 4(a) and 4(b).

The transmitter 3 is in a sleep state and consumes little battery energy other than during the measuring time t2 and the transmission time t3. The detection interval t1 is determined by considering the capacity of the battery 15, the power consumption of the transmitter 3 and the operating times t2, t3 of the transmitter 3. In this embodiment, the detection interval t1 is fifteen seconds.

As shown in Fig. 3, the receiver 4 includes a controller 20, which is, for example, a microcomputer. The controller 20 includes a central processing unit (CPU), a random access memory (RAM) and a read only memory (ROM). An RF circuit 21 receives data transmitted from the transmitters 3 through a reception antenna 22 and sends the data to the controller 20. Based on the ID code and pressure and temperature data in the received data, the controller 20 obtains the internal pressure and temperature of the tire 2 corresponding to the transmitter 3 that has sent the data.

The controller 20 also displays information regarding the tire pressure, the tire temperature and other data on a display 23. The display 23 is located in the view of the driver. The controller 20 also controls an alarm device 24 to warn a driver of an abnormal tire pressure or an abnormal tire temperature. The alarm device 24 may be a device that generates sound or a device that emits light for indicating a tire abnormality. Alternatively, notice of a tire abnormality may be displayed on the display 23. The receiver 4 is activated, for example, when the ignition key (not shown) is turned on.

Operation of each transmitter 3 will now be described with reference of the flowchart of Figs. 4(a) and 4(b). The controller 10 repeatedly performs the routine of Figs. 4(a) and 4(b) every fifteen seconds, which is the detection interval t1.

When the battery 15 is installed during the assembly of each transmitter 3, the controller 10 commands the pressure sensor 11 and the temperature sensor 14 to perform the first detection. The controller 10 stores the first pressure detection value Pn and the first temperature detection value Tn as an initial pressure transmission value Pt and an initial temperature transmission value Tt and commands the transmission circuit 12 to transmit the initial transmission values Pt, Tt.

The routine shown in Fig. 4(a) relates to detection and transmission of the pressure in each tire 2. In step S1, the controller 10 commands the pressure sensor 11 to detect the pressure in the tire 2. In step S2, the controller judges whether the absolute value of the difference between a stored pressure transmission value Pt and a new pressure detection value Pn is equal to or greater than a predetermined pressure determination value α1. The stored pressure transmission value Pt was transmitted in the previous routine. The stored pressure transmission value Pt was stored in the memory of the controller 10 in a previous cycle of the routine. The new pressure detection value Pn is detected in step S1. That is, the new pressure detection value Pn is detected in the current cycle of the routine.

The pressure determination value α1 is relatively small. Changes of the tire pressure within the range of the determination value α1 have little influence on the running conditions of the vehicle 1.

If the absolute value of the difference between the stored pressure transmission value Pt and the new pressure detection value Pn is less than the pressure determination value α1, the controller 10 judges that the air pressure of the tire 2 has changed in a small range and temporarily suspends the routine. If the absolute value of the difference between the stored pressure transmission value Pt and the new pressure detection value Pn is greater than the pressure determination value α1, the controller 10 judges that the air pressure of the tire 2 has changed relatively greatly and moves step S3.

In step S3, the controller 10 stores the new pressure detection value Pn, which was detected in the current cycle of the routine, as the stored pressure transmission value Pt. In other words, the stored pressure value Pt is updated, or renewed, with the new pressure value Pn. In step S4, the controller 10 commands the transmission circuit 12 to transmit data that includes the stored pressure transmission value Pt. Then, the current routine is suspended.

The routine of Fig. 4(b) relates to detection and transmission of the temperature of each tire 2. The routine of Fig. 4(b) is executed concurrently with the routine of Fig. 4(a). In step S11, the controller 10 commands the temperature sensor 14 to detect the temperature in the tire 2. In step S12, the controller 10 judges whether the absolute value of the difference between a stored temperature transmission value Tt and a new temperature detection value Tn is equal to or greater than a predetermined temperature determination value α2. The stored temperature transmission value Tt was transmitted in the previous routine. The stored temperature transmission value Pt was stored in the memory of the controller 10 in a previous cycle of the routine. The new temperature detection value Tn is detected in step S11. That is, the new temperature detection value Tn is detected in the current cycle of the routine.

The temperature determination value α2 is relatively small. Changes of the tire temperature within the range of the determination value α2 have little influence on the running conditions of the vehicle 1.

If the absolute value of the difference between the stored temperature transmission value Tt and the new temperature detection value Tn is less than the temperature determination value α2, the controller 10 judges that the temperature of the tire 2 has changed in a small range and temporarily suspends the routine. If the absolute value of the difference between the stored temperature transmission value Tt and the new temperature detection value Tn is greater than the temperature determination value α2, the controller 10 judges that the temperature of the tire 2 has changed relatively greatly and moves step S13.

In step S13, the controller 10 stores the new temperature detection value Tn, which was detected in the current cycle of the routine, as the stored temperature transmission value Tt. In other words, the stored temperature value Tt is updated, or renewed, with the new temperature value Tn. In step S14, the controller 10 commands the transmission circuit 12 to transmit data that includes the stored temperature transmission value Tt. Then, the routine is suspended.

Fig. 6 is a graph showing the relationship between changes of the pressure in each tire 2 and the operation of the associated transmitter 3. During a period Ta in which the vehicle 1 is not moving, the air pressure of the tire 2 slightly fluctuates according to the outside temperature. Thus, the pressure detection value Pn, which is detected at the detection intervals t1, changes little. In other words, the new pressure detection value Pn is slightly different from the air pressure value that was transmitted in the previous routine, or the stored pressure transmission value Pt, however, the difference is less than the pressure determination value α1. Even if the data representing the air pressure is not transmitted during the period Ta, the current air pressure can be judged to be close to the air pressure that was transmitted in the previous routine.

During a period Tb in which the vehicle 1 is moving, the temperature and the air pressure of the tire 2 increase due to the friction between the tire 2 and the road surface. Accordingly, the pressure detection value Pn, which is detected at every detection interval t1, gradually increases. When the new pressure detection value Pn exceeds the stored pressure transmission value Pt by the pressure determination value α1 or by a greater value, the new pressure detection value Pn is transmitted. That is, the new transmitted pressure detection value Pn is set as the stored new pressure transmission value Pt, and the stored pressure transmission value Pt is transmitted. While the vehicle 1 is moving in a normal state, that is, when the vehicle 1 is moving on a relatively smooth road surface without any abrupt changes of speed, the temperature and the air pressure of the tire 2 are substantially constant. Therefore, the new pressure detection value Pn changes little and the data representing the air pressure is not transmitted. In this case, the current air pressure can be judged to be in the vicinity of the air pressure that was previously transmitted.

During a period Tc, at the beginning of which the vehicle is stopped, the temperature of the tire 2 decreases to approach the outside temperature. Accordingly, the air pressure of the tire 2 drops. If the difference between the new pressure detection value Pn and the stored pressure transmission value Pt is equal to or greater than the pressure determination value α1, the new pressure detection value Pn is transmitted. That is, the new pressure detection value Pn is set as the stored pressure transmission value Pt before the stored pressure transmission value Pt is transmitted.

If the tire 2 goes flat during a period Td, in which the vehicle 1 is moving. The air pressure drops quickly. Accordingly, the difference between the pressure detection value Pn and the current pressure transmission value Pt exceeds the pressure determination value α1, and the pressure detection value Pn is immediately transmitted. Therefore, the driver of the vehicle 1 is immediately informed of an abnormality of the air pressure in the tire 2 through the display 23 of the receiver 4 or the alarm 24.

When the vehicle 1 is stopped (time Te) and the air pressure of the tire 2 is equal to the atmospheric pressure, the air pressure of the tire 2 stops declining. Thus, data regarding the air pressure is not transmitted. However, the current air pressure can be judged to be in the vicinity of the air pressure that was transmitted previously, or in the vicinity of the atmospheric pressure. Therefore, even if the data is not transmitted, an abnormality of the air pressure of the tire 2 is accurately detected.

As described above, the transmitters 3 according to the embodiment of Figs. 1 to 6 detect the condition of each tire 2 at predetermined time intervals and transmit the most recent data of the tire condition only when the value representing the current tire condition has changed from the value of the tire condition that was transmitted previously by a predetermined determination value or by a value greater than the determination value. In other words, if the tire condition is substantially unchanged, data is not transmitted. The data is transmitted only when the tire condition changes by a relatively great degree.

The electricity needed for transmission is significantly greater than the electricity needed for detection. However, in the embodiment of Figs. 1 to 6, transmission is rarely performed when the vehicle 1 is not moving or when the vehicle 1 is moving in a normal state.

When the driver needs to be immediately informed of the tire condition, for example, when the tire condition greatly changes, transmission takes place. Therefore, the driver is immediately informed of an abnormality in the tire condition. Also, if transmission does not take place for an extended period, the driver can accurately judge the current tire condition based on the tire condition that was received by the receiver 4 through the previous transmission.

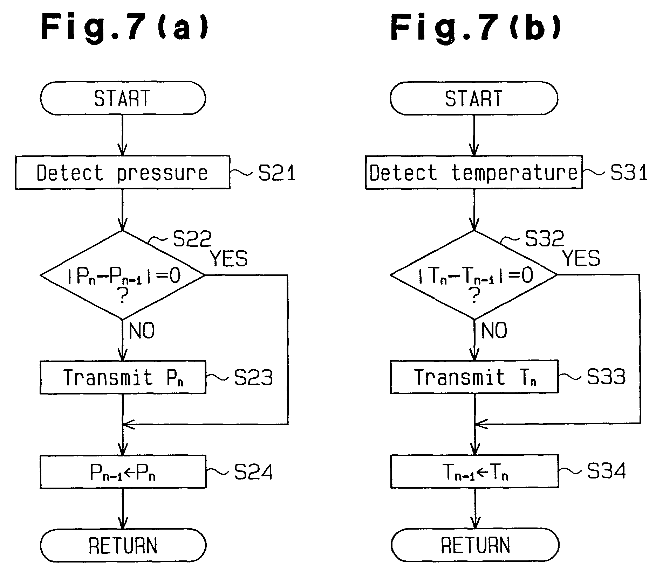

A second embodiment of the present invention will now be described with reference to flowcharts of Figs. 7(a) and 7(b). The routines of Figs. 7(a) and 7(b) are performed every fifteen seconds, which is the detection interval t1.

When the battery 15 is installed during the assembly of each transmitter 3, the controller 10 commands the pressure sensor 11 and the temperature sensor 14 to perform a first detection. The controller 10 stores a new pressure detection value Pn and a new temperature detection value Tn as initial values. The initial pressure detection values Pn and the initial temperature detection value Tn may be transmitted from the transmission circuit 12. However, the initial detection values Pn, Tn need not be transmitted.

The routine of Figs. 7(a) relates to detection and transmission of the air pressure of each tire 2. In step S21, the controller 10 commands the associated pressure sensor 11 to detect the air pressure in the tire 2. In step S22, the controller 10 judges whether the absolute value of the difference between the new pressure detection value Pn, which was detected in the current cycle of the routine, and a previous pressure detection value Pn-1, which was detected in the previous routine, is zero. The previous pressure detection value Pn-1 is stored in the memory of the controller 10.

When the absolute value of the difference between the new pressure detection value Pn and the previous pressure detection value Pn-1 is zero, the controller 10 judges that the air pressure in the tire 2 has not changed and moves to step S24. If the absolute value of the difference is not zero, the controller 10 judges that the air pressure in the tire 2 has changed and moves to step S23.

When the judgment of whether the absolute value of the difference is zero is made, errors in acceptable ranges such as errors due to the characteristics of the pressure sensor 11 are not considered.

In step S23, the controller 10 commands the transmission circuit 12 to transmit data including the new pressure detection value Pn. In step S24, the controller 10 stores the new pressure detection value Pn as the previous pressure detection value Pn-1 and temporarily suspends the routine.

The routine of Fig. 7(b) relates to detection and transmission of the temperature of each tire 2. The routine of Fig. 7(b) is executed concurrently with the routine of Fig. 7(a). In step S31, the controller 10 commands the temperature sensor 14 to detect the temperature in the tire 2. In step S32, the controller 10 judges whether the absolute value of the difference between the new temperature detection value Tn and a previous temperature detection value Tn-1, which was detected in the previous routine, is zero. The previous temperature detection value Tn-1 is stored in the memory of the controller 10.

If the absolute value of the difference between the new temperature detection value Tn and the previous temperature detection value Tn-1 is zero, the controller 10 judges that the temperature in the tire 2 has not changed and moves to step S34. If the absolute value of the difference is not zero, the controller 10 judges that the temperature of the tire 2 has changed and moves step S33.

When the judgment of whether the absolute value of the difference is zero is made, errors in acceptable range such as errors due to the characteristics of the temperature sensors 14 are not considered.

In step S33, the controller 10 commands the transmission circuit 12 to transmit data including the new temperature detection value Tn. In step S34, the controller 10 stores the new temperature detection value Tn as the previous temperature detection value Tn-1 in its memory and temporarily suspends the routine.

The embodiment of Figs. 7(a) and 7(b) has the same advantages as the embodiment of Figs. 1 to 6.

It should be apparent to those skilled in the art that the present invention may be embodied in many other specific forms without departing from the spirit or scope of the invention. Particularly, it should be understood that the invention may be embodied in the following forms.

The detection interval t1 is not limited to fifteen seconds but may be altered according to the type of the tires 2, in which the transmitters 3 are mounted.

In the embodiment of Figs. 1 to 6, the pressure determination value α1 and the temperature determination value α2 may be altered according to the type of the tires 2, in which the transmitters 3 are mounted.

In the embodiment of Figs. 7(a) and 7(b), the detected current tire condition is transmitted only when the detected current tire condition has changed from a previously detected tire condition. However, the data representing the current tire condition may be transmitted when the current tire condition is different from the data that was detected in a cycle of the routine that occurred earlier than the previous cycle.

The present invention is effective as long as the air pressure in each tire 2 is detected and transmitted. That is, detection and transmission of the tire temperature may be omitted. This permits a transmitter 3 that has minimized but necessary functions to be inexpensively manufactured.

Therefore, the present examples and embodiments are to be considered as illustrative and not restrictive and the invention is not to be limited to the details given herein, but may be modified within the scope and equivalence of the appended claims.
Summarizing, a preferred embodiment includes transmitters 3.Each transmitter 3 is installed in a vehicle tire and is powered by a battery 15. Each transmitter 3 includes a sensor 11, 14 for detecting a condition of the associated tire 2, a transmission circuit 12 for wirelessly transmitting data representing the condition and a controller 10 that controls the sensor 11, 14 and the transmission circuit 12. The controller 10 controls each sensor 11, 14 to detect the condition at predetermined detection intervals. Also, the controller 10 controls the transmission circuit 12 to transmit data that represents the detected condition only when the detected current tire condition (Pn, Tn) has changed from the previously transmitted tire condition (Pt, Tt) by a predetermined value (α1, α2) or more. As a result, significant changes of the tire condition are immediately communicated to a driver, and battery strength is conserved.

## Claims

1. A battery-powered transmitter for wirelessly transmitting data regarding the condition of a vehicle tire (2), the transmitter comprising:
a sensor (11, 14) for detecting the condition of the tire (2);
a transmission circuit (12) for wirelessly transmitting data representing the detected tire condition; and
a controller (10) for controlling the sensor (11, 14) and the transmission circuit (12), **characterized in that**:
the controller (10) controls the sensor (11, 14) to detect the tire condition at predetermined intervals, and wherein the controller (10) controls the transmission circuit (12) to transmit data that represents the detected current tire condition when a value (Pn, Tn) representing the detected current tire condition has changed from a previously transmitted value (Pt, Tt) representing the detected tire condition by a predetermined amount (α1, α2) or by an amount that is greater than the predetermined amount (α1, α2).

2. A battery-powered transmitter for wirelessly transmitting data regarding the condition of a vehicle tire (2), the transmitter comprising:
a sensor (11, 14) for detecting the condition of the tire (2);
a transmission circuit (12) for wirelessly transmitting data representing the detected tire condition; and
a controller (10) for controlling the sensor (11, 14) and the transmission circuit (12), **characterized in that**:
the controller (10) controls the sensor (11, 14) to detect the tire condition at predetermined intervals, and wherein the controller (10) controls the transmission circuit (12) to transmit data that represents the detected current tire condition only when the detected current tire condition has changed from a tire condition that was detected in the past.

3. The transmitter according to claim 2, **characterized in that** the controller (10) controls the transmission circuit (12) to transmit the data only when the detected current tire condition has changed from that detected at the preceding interval.

4. The transmitter according to any one of claims 1 to 3, **characterized in that** the tire condition includes at least one of the pressure and the temperature in the tire (2).

5. A tire condition monitoring apparatus **characterized by** comprising the transmitter (3) according to any one of claims 1 to 4 and a receiver (4), wherein the receiver (4) receives data that is wirelessly transmitted from the transmitter (3).

6. A method for wirelessly transmitting data regarding the condition of a vehicle tire (2), **characterized by**:
detecting the condition of the tire (2) at predetermined intervals; and
transmitting data that represents the detected current tire condition when the difference between a value (Pn, Tn) representing the detected current tire condition and a previously transmitted value (Pt, Tt) representing the detected tire condition is equal to or greater than a predetermined value (α1, α2).

7. A method for wirelessly transmitting data regarding the condition of a vehicle tire (2), **characterized by**:
detecting the condition of the tire (2) at predetermined intervals; and
transmitting data that represents the detected current tire condition only when the detected current tire condition has changed from a tire condition that was detected in the past.

8. The method according to claim 7, **characterized in that** the data is transmitted only when the detected current tire condition has changed from that detected at the preceding interval.
